# EUROPEAN PATENT APPLICATION

(11) **EP 4 507 433 A1**
(43) Date of publication of application: **12.02.2025**
(21) Application number: 23190889.8
(22) Date of filing: 10.08.2023
(51) Int. Cl.: H04W 72/115, H04L 1/08, H04W 72/21

(54) **INDICATION OF UNUSED TRANSMISSION OCCASIONS FOR PUSCH REPETITION**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

Provided are a communication apparatus, a scheduling node, and communication methods for a communication apparatus and a scheduling node. The communication apparatus comprises a transceiver, which, in operation, receives a configured grant, CG, configuration periodically configuring CG transmission occasions, TOs, and circuitry which, in operation, selects CG TOs from the periodically configured CG TOs for uplink data transmission, and generates an unused transmission occasion, UTO, indication indicating which of the periodically configured CG TOs are not selected for uplink data transmission. The periodically configured CG TOs associated with the UTO indication are determined based on at least one of a number of repetitions configured for uplink data transmission, or an amount or type of data transmitted in addition to the UTO indication on a CG TO. The transceiver, in operation, transmits the UTO indication and performs the uplink data transmission on the selected CG TOs.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates enabling communication efficiency when indicating resources unused for configured grant transmissions, for instance when repetition is supported.

In an embodiment, the techniques disclosed herein feature a communication apparatus comprising a transceiver, which, in operation, receives a configured grant, CG, configuration, which periodically configures CG transmission occasions, TOs; and circuitry which, in operation, selects CG TOs from the periodically configured CG TOs for uplink data transmission, and generates an unused transmission occasion, UTO, indication indicating which of the periodically configured CG TOs are not selected for the uplink data transmission, wherein the circuitry, in operation, determines the periodically configured CG TOs associated with the UTO indication based on at least one of:
- a number of repetitions configured for the uplink data transmission, or
- an amount or type of data transmitted in addition to the UTO indication on a CG TO where the UTO indication is transmitted, and
wherein the transceiver, in operation, transmits the UTO indication and performs the uplink data transmission on the selected CG TOs.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: is a schematic drawing that shows a functional split between NG-RAN and 5GC to which exemplary embodiments of the present disclosure may be applied;
- **Fig. 3**: is a sequence diagram for RRC connection setup/reconfiguration procedures to which exemplary embodiments of the present disclosure may be applied;
- **Fig. 4**: is a schematic drawing showing usage scenarios of Enhanced mobile broadband (eMBB), Massive Machine Type Communications (mMTC) and Ultra Reliable and Low Latency Communications (URLLC) to which exemplary embodiments of the present disclosure may be applied;
- **Fig. 5**: is a block diagram showing an exemplary 5G system architecture for a non-roaming scenario;
- **Fig. 6**: is a schematic drawing illustrating mapping of unused transmission occasion (UTO) indication bits to configured grant transmission occasions (CG TOs);
- **Fig. 7**: is a block diagram showing a communication apparatus and a scheduling node;
- **Fig. 8**: is a block diagram showing CG TO selection indication circuitry of a communication apparatus;
- **Fig. 9**: is a block diagram showing CG TO determination circuitry of a scheduling node;
- **Fig. 10**: is a flow chart showing method steps of a communication method for a communication apparatus;
- **Fig. 11**: is a flow chart showing method steps of a communication method for a scheduling node;
- **Fig. 12**: is schematic drawing illustrating mapping of UTO indication bits to CG TOs excluding indication of a series of repetitions on CG TOs on which the UTO indication is transmitted;
- **Fig. 13**: is a schematic drawing illustrating mapping of a single UTO indication bit to a series of repetitions on CG TOs;
- **Fig. 14**: is a schematic drawing illustrating cancellation of a repetition on a CG TO transmission collided with a downlink resource;
- **Fig. 15**: is a schematic drawing illustrating postponement of a repetition on a CG TO transmission collided with a downlink resource to a later CG TO;
- **Fig. 16**: is a schematic drawing illustrating postponement of series of repetitions that cannot be transmitted within a configured time period;
- **Fig. 17**: is a schematic drawing illustrating transmission of a reduced number of repetitions to fit into a configured time period;
- **Fig. 18**: is a schematic drawing illustrating adaptation of a size of an UTO indication to an amount or type of data transmitted on a Physical Uplink Share Channel (PUSCH).

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

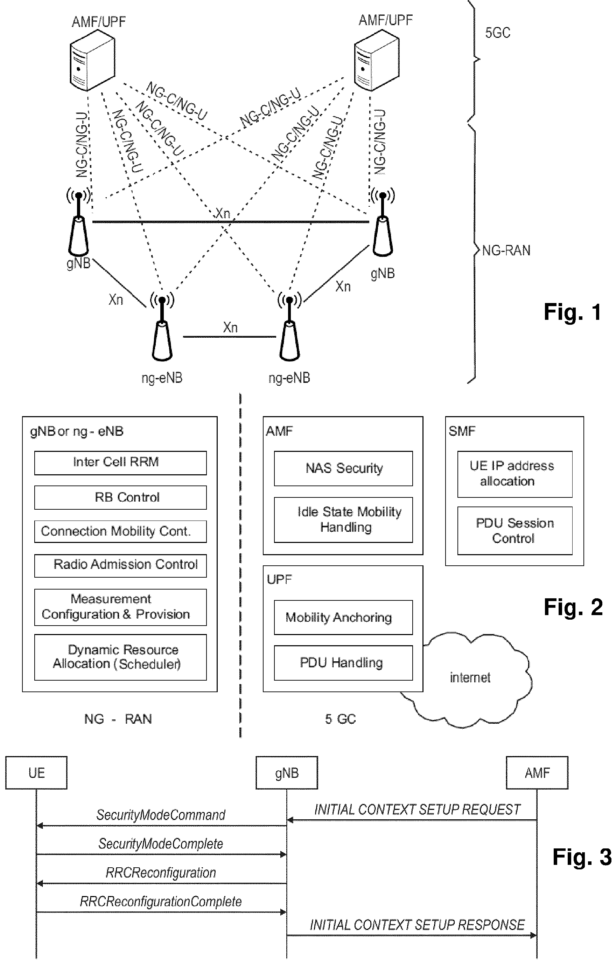

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0 or e.g. v16.2.0, section 4). For instance, downlink and uplink transmissions are organized into frames with 10ms duration, each frame consisting of ten subframes of respectively 1ms duration. In 5G NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types of NR numerology are summarized in 3GPP TS 38.211, v 15.7.0.

### 5G NR functional split between NG-RAN and 5GC

**Fig. 2** illustrates functional split between NG-RAN and NGC or 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

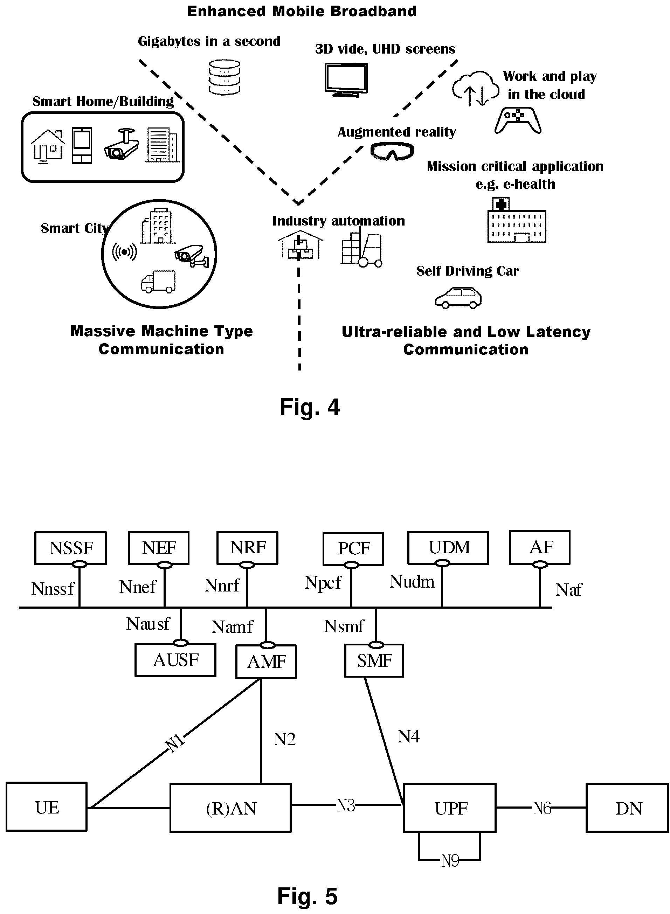

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a Demodulation Reference Signal (DMRS), a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS). Reference signals may be used at a receiving apparatus for estimating channel characteristics and/or for synchronization. One or more parameters of a reference signal may also be used to transmit data (control or payload) while another one or more parameters of the same reference signal may be used as the reference. For example, a reference signal may be used to compare the received power with the reference power. However, the reference signals may also be used to compare phase and/or frequency or the like.

### Time Intervals

In the present disclosure, time resource units are not limited to one or a combination of slots and symbols, and may be time resource units, such as frames, superframes, subframes, slots, time slot subslots, mini-slots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the described embodiment(s), and may be other numbers of symbols.

### Frequency Bands

The present disclosure may be applied to any of a licensed band and an unlicensed band. It is applicable for any frequency bands, but may be particularly advantageous for higher frequency bands due to the increasing benefits of beamforming. In particular, frequency bands for 5G NR are separated into two different frequency ranges. First, there is Frequency Range 1 (FR1), which includes sub-6 GHz frequency bands, some of which are traditionally used by previous standards, but have been extended to cover potential new spectrum offerings from 410 MHz to 7125 MHz. The other band is Frequency Range 2 (FR2), which includes frequency bands from 24.25 GHz to 52.6 GHz.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Physical Resource Block

In general, the term "*physical resource block*" (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Terminology

In the following, UEs, relay nodes, base stations (network nodes), and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

It will be appreciated that, terms such as 3GPP NR system, 5G-NR system, 5G NR system, 5G system, 5G mobile communication system may be used interchangeably herein.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the disclosure and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A ***terminal*** or ***user terminal*** or ***user device*** or ***mobile station*** or ***mobile node*** is referred to in the LTE and NR as a *user **equipment (UE).*** This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the ***base station*** may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node,*** e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

### Extended Reality Applications

As exemplarily shown in **Fig. 4****,** extended reality (XR) applications are considered, including augmented reality (AR), virtual reality (VR), mixed reality (MR), and cloud gaming use cases. To support XR applications while reducing the power consumption and increasing the system capacity, a 3GPPP work item for XR enhancements was approved (cf. 3GPP TSG RAN Meeting #98-e, RP-223502, "XR Enhancements for NR").

Objectives of the work item include specifying enhancements related to power saving, including DRX (discontinuous reception) support of XR frame rates corresponding to non-integer periodicities (through at least semi-static mechanisms e.g. RRC signalling).

Objectives of the work item further include the following enhancements related to capacity.
- Multiple CG PUSCH transmission occasions (TOs) in a period of a single CG PUSCH configuration;
- Dynamic indication of unused CG PUSCH occasion(s) based on UCI by the UE;
- Buffer Status Report (BSR) enhancements including at least new BS Table(s);
- Delay reporting of buffered data in uplink;
- Provision of XR traffic assistance information for DL and UL (e.g. periodicity); and
- Discard operation of PDU Sets.

Typically, the XR applications require high data rate in downlink (DL) and uplink (UL) with relatively strict packet delay budget (PDB). In addition, some of XR applications run on devices with a limited source of energy, such as wearable glasses or handheld devices. In this regard, energy efficiency is an important concern. Moreover, XR applications impose a variety of data types, including video streams and pose control traffic.

### Video Stream Traffic Requirements

A video stream may contain video frames with quite large and varying sizes. Regarding packet sizes, for a high quality video stream, the frame size may be around 1M bits after compression for an 8K video. This can lead to having large size packets. Moreover, frame sizes may vary, e.g. due to the structure of the video content or due to some frames being less compressible than other frames. For instance, I-frames (intra-coded pictures), which do not require other frames to decode, may be less compressible than or P-frame/B-frame (predicted or bidirectionally predicted pictures), which require information from the preceding frame (P-frame) or from the preceding and the following frame (B-frames).

Moreover, video stream traffic may typically be characterized as "quasi-periodic", where frames arrive over a time window related to jitter. For instance, the frame packets from a UE/gNB may arrive at the gNB/UE over a time window of [-4, 4] ms or even a larger time window.

Regarding periodicities, an exemplary video stream generates 60, 90, or 120 fps (frames per second), which correspond to a periodicity of 16.667 ms, 11.111 ms, and 8.333 ms, respectively. Accordingly, the periodicity of the time window may be non-integer.

It should be further noted that the delay budget for delivering the XR packets could be tight, for instance, 10 ms for AR/VR or 15 ms for cloud gaming.

### Configured Grant

A UE may be configured for uplink transmission on the PUSCH without having to receive individual resource allocations on the PDCCH for periodic transmission on a specific set of resource blocks. This is referred to as "configured grant" (CG) resource allocation or "grant free" resource allocation. In 3GPP NR, the following two types of CG have been specified within Release 15.

On the one hand, Type 1 configured grants are fully configured by RRC using RRC signaling and do not require PDCCH (layer 1) signaling. A Type 1 CG remains valid until further RRC signaling reconfigures the CG.

On the other hand, Type 2 configured grants are configured using a combination of RRC signaling and PDCCH signaling. A subset of the resource allocation is provided by the RRC signaling, whereas the PDCCH may provide the remaining resource allocation information and also acts as an activation trigger, deactivation trigger, or reactivation trigger for the PUSCH transmissions.

As mentioned above, multiple CG PUSCH transmission occasions (TOs) in a period of a single CG PUSCH configuration (more briefly referred to as "multi-PUSCHs CG") are considered, e.g. for XR applications such as uplink video or pose control traffic.

For multi-PUSCHs CG, issues for possible consideration include MCS (modulation and coding scheme) design and frequency domain resource allocation (cf. RAN1#112bis-e meeting, 3GPP document R1-2304048: Moderator Summary#5 (Final) - XR Specific Capacity Improvements).

In particular, regarding MCS design, it is considered that for CG PUSCHs in a multi-PUSCHs CG configuration, MCS of the CG PUSCHs in the CG configuration are the same between different PUSCH occasions.

Moreover, it is considered that for CG PUSCHs in a multi-PUSCHs CG configuration, frequency domain resource allocations of the CG PUSCHs configuration are the same between different PUSCH occasions.

Regarding time domain resource allocation (TDRA) for multi-PUSCHs CG type-1, it can be considered to use some principles based on a framework of NR-U (NR unlicensed band operation.

In particular, for Type- CGs, it is an approach to follow rules for a DCI format 0_0 on UE specific search space, as defined in of 3GPP Technical Specification (TS) 38.214, (NR, Physical layer procedures for data, V17.6.0, 2023-06, Clause 6.1.2.1.1) incorporated herein by reference. To determine the configuration of TDRA, PUSCH repetition type A is assumed according to TS 38.2.1.4, Clause 6.1.2.3 incorporated herein by reference. If repetition is not supported, this implies that the corresponding repetition factor is one.

For Type-2 CGs, in the NR-U based framework, the TDRA table can be determined by a TDRA table associated with activation DCI, as defined in TS 38.214 clause 6.1.2.1 incorporated herein by reference, wherein a DCI format for activation DCI with *"pusch-RepTypeA"* (corresponding to a configuration of PUSCH repetition type A) is applicable. If repetition is not supported, this implies that the corresponding repetition factor is one.

### UTO (Unused transmission occasion) indication

A further issue for possible consideration is the indication for unused CG PUSCH transmission occasions. In particular, for dynamic indication of unused CG PUSCH transmission occasions based on a UCI (uplink control information), it may be considered that the indicated "unused" CG PUSCH TO(s) indicated by the UCI in a CG PUSCH for a CG configuration can be consecutive or non-consecutive CG PUSCH TO(s) in time domain in one CG period. A further possible issue for consideration is whether and how the unused TO(s) can be associated to multiple CG configuration.

It is further considered that the UTO-UCI provides a bitmap where a bit corresponds to a TO within some time duration or range. The bit indicates whether the TO is "unused". Herein, the term "UTO-UCI" refers to the "UCI that provides information about unused PUSCH transmission occasions".

As mentioned, CG PUSCH TOs can be consecutive or non-consecutive in time domain. For instance, a CG PUSCH TO may comprise one or more or all symbols within a slot. In a CG PUSCH configuration, and there may be one or more CG PUSCH TOs within a slot, CG PUSCH TOs in consecutive slots or non-consecutive slots per period of the CG PUSCH configuration.

Furthermore, collision of CG PUSCH TOs with resources configured for the downlink can be handled in such a manner that a UTO indication is applicable to only valid CG PUSCH TOs. Here, a configured PUSCH CG PUSCH is invalid if the CG PUSCH is dropped due to collision with DL symbol(s) indicated e.g. by semi-static (e.g. RRC) configuration such as *tdd-UL-DL-ConfigurationCommon* or *tdd-UL-DL-ConfigurationDedicated* or SSB. Otherwise, it is valid.

### Repetition

A PUSCH repetition can be defined as transmitting the same uplink data packet more than once, without waiting for any feedback of previous transmission(s) of the same data packet. Advantages of PUSCH repetitions include an improvement in the overall reliability and a reduction in latency in comparison with HARQ, as no feedback is required. Types of repetition include above-mentioned PUSCH repetition type A mentioned above, where each slot contains only one repetition, as well as repetition type B, where repetitions are carried out in consecutive mini-slots, allowing for more than one repetition in a slot. A series or bundle of repetitions can be performed using different redundancy versions (RVs) of the same transport block (TB). A Transport Block is a packet of data passed between MAC and PHY layers.

### Further issues

As mentioned above, a NR-U framework, which already supports PUSCH repetition, can be adopted for multi-PUSCH resource allocations. The inventors have considered the possibility of considering PUSCH repetition for multi-PUSCHs in order to allow for high reliability.

Furthermore, as described the unused transmission occasions (UTO) indication, which can be included in uplink control information, can be implemented as consisting of bits mapped to PUSCH occasions. It can be considered to include only valid CG PUSCH occasions in the UTO indication. As mentioned above, A CG PUSCH is invalid if it is collided with DL symbol(s) indicated by *tdd-UL-DL-ConfigurationCommon* or *tdd-UL-DL-ConfigurationDedicated* or *SS*B.

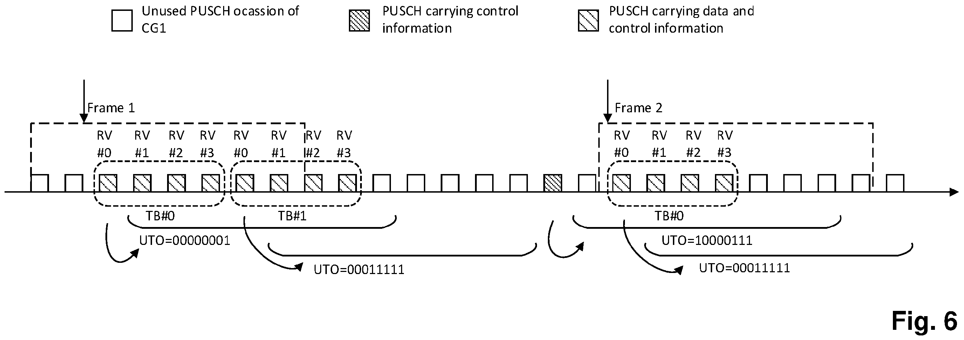

To illustrate UTO indication, an example is shown in **Fig. 6** where a UE is configured with CG configuration with 2 ms periodicity, and each 2 ms, a slot is configured as a CG PUSCH occasion. The UE is configured to perform each TB transmission of the CG configuration with 4 repetitions to achieve a desired reliability. The 4 repetitions are merely an example, and any lower and higher repetition number could be considered. The PUSCH repetitions are performed with different redundancy versions (RV), e.g., RV#0, ..., RV#3 (Other RV combinations could be considered as well). As shown in **Fig. 6****,** a UTO indication with a size of 8 bits is exemplarily considered. The UTO bits are mapped to 8 following subsequent PUSCH occasions starting from the PUSCH occasion subsequent to the PUSCH occasion on which the UTO indication is received. If a bit is set as 0, it means that the UE will use the corresponding PUSCH occasion; while if the bit is set as 1, the UE will not use the corresponding PUSCH occasion. The unused PUSCH occasions can be released and be rescheduled for other UE traffics (e.g. of the same UE or other UEs). As an illustrative exemplary use case such as XR video data, the CG PUSCH is assumed to carry video frame data, and each frame is conveyed in one or more TBs (transport blocks). The dashed lines in Fig. 6 symbolize the jitter windows associated with video data of the respective frames.

For the Frame 1, the UE will use two TBs to carry the data. For the Frame 2, the UE only needs to use 1 TB to carry the data. In addition, the UE sends UTO indications along the TB transmissions. The UTO bits are mapped to 8 following PUSCH occasions. The UE sends an extra UTO indication between the two frames to indicate not using the next following PUSCH occasion.

It is noted that the UTO indication may be the same in each repetition of the same transport block. In such a case, the UE and the gNB are able to determine e.g. from the redundancy version which is the first PUSCH TO on which the UTO indication is transmitted and map the bits of the UTO indication to subsequent PUSCH TOs in accordance with this determination.

The inventors have noted that using the above-described UTO design UTO-UCI design with a single bit mapping to a PUSCH occasion might lead to low communication efficiency and waste of resources. In view of this, the present disclosure provides approaches to address efficient design of UTO-UCI, including considering the possibility of PUSCH repetition and handling the collisions of PUSCH occasion with DL slots and/or symbols.

### Embodiments

In view of the above, the inventors have considered possibilities of adapting the UTO-UCI configuration according to the type of information carried by the PUSCH occasion and according to whether the PUSCH occasion (e.g. the PUSCH occasion where the UTO indication is transmitted or PUSCH occasions indicated by the UTO indication) is within a PUSCH repetition bundle. The present disclosure thereby provides approaches to indication of unused transmission occasions for PUSCH repetitions.

The present disclosure in particular provides scheduling devices or scheduling apparatuses (such as scheduling nodes), corresponding methods for scheduling devices, communication devices or communication apparatuses (e.g. adapted/configured to perform the function of a communication terminal in a communication system), corresponding methods and (computer) programs (e.g. stored on a memory) for scheduling devices, communication devices (or apparatuses), communications systems comprising such scheduling devices and communication devices, as well as integrated circuits which, in operation, control a processes of scheduling devices/communication devices to perform the respective methods.

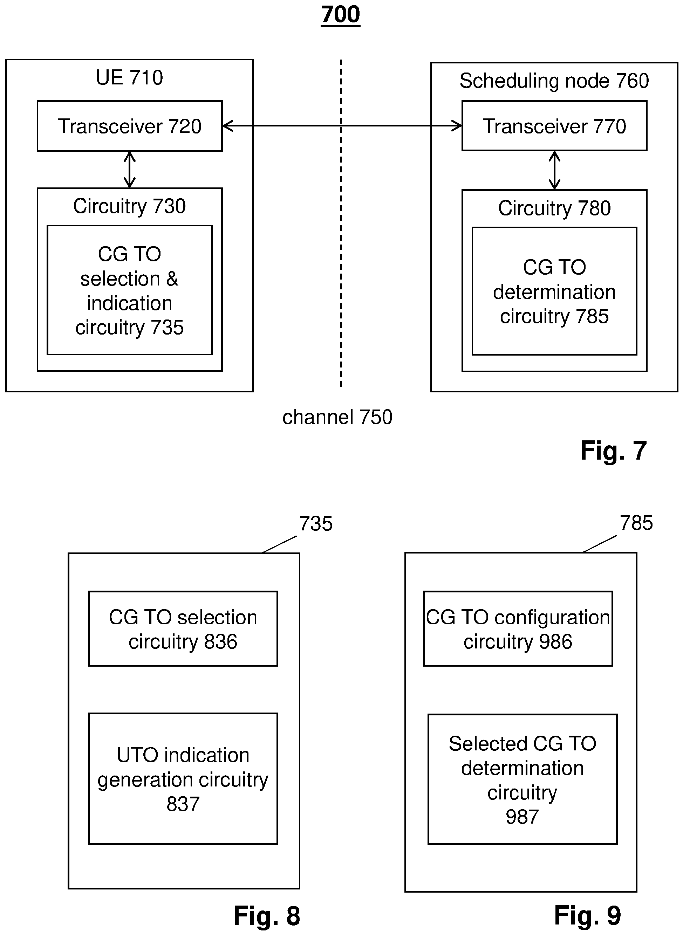

An example of such communication system is illustrated in **Fig. 7****.** The communication system 800 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

**Fig. 7** illustrates a general, simplified and exemplary block diagram of a communication apparatus 710 (here assumed to be a user equipment (UE) or communication terminal) and a scheduling device 760 or scheduling node (here exemplarily assumed to be located in a base station, e.g. in a LTE eNB (alternatively termed ng-eNB) or the gNB in 5G NR) in the communication system 700. However, in general, a scheduling device may also be a terminal in case of a sidelink connection between two terminals. Moreover, in particular with respect to the use cases of URLLC; eMBB, and mMTC, the communication device 710 may also be a sensor device, a wearable device, or a connected vehicle, or a controller of an automated machine in an industrial factory.

As illustrated in **Fig. 7****,** the communication device 710 and the scheduling device 760 (eNB/gNB) may communicate with each other over a (wireless) physical channel 750 respectively using their transceivers 720 (communication terminal side) and 770 (base station side). Together, the scheduling device 760 and the communication apparatus 710 may form the communication system 700. The communication system 700 may further include other entities such as those shown in **Fig. 1** and, e.g. a plurality of UEs connected to the scheduling node or a relay node relaying signals to/from the base station from/to one or more UEs.

As illustrated in **Fig. 7****,** the communication device 710 may comprise a transceiver 720 and circuitry (or processing circuitry) 730, and the scheduling device 760 may comprise a transceiver 770 and a (processing) circuitry 780.

The term "***transceiver***" refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication device to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

In the present disclosure of embodiments and examples, the expressions "UE" and "gNB" before "circuitry" and "transceiver" are used for short to distinguish the transceivers and circuitries of a communication apparatus 710 and a scheduling node 760, without implying any limitation to networks such as 3GPPP NR networks.

According to an exemplary embodiment, a communication apparatus 710 as illustrated e.g. in **Fig. 7** (left-hand side) is provided. The communication apparatus 710 comprises a transceiver 820 and circuitry 730.

The transceiver 720, in operation, receives, e.g. from a scheduling node 760, a configured grant (CG) configuration, which periodically configures CG transmission occasions (TOs).

The circuitry 730, in operation, selects CG TOs from the periodically configured CG TOs for uplink data transmission, and generates an unused transmission (UTO) indication. The UTO indication indicates which of the periodically configured CG TOs configured by the CG configuration are not selected for the uplink data transmission. In generating the UTO indication, the circuitry 730 determines CG TOs associated with the UTO based on at least one of:
- a number of repetitions configured for the uplink data transmission, or
- an amount and/or type of data transmitted in addition to the UTO indication on a CG TO among the periodically configured CG TOs where the UTO indication is transmitted.

The transceiver 730, in operation, transmits the UTO indication, e.g. to the scheduling node 760. The transceiver 730 further performs the uplink data transmission on the selected TOs among the periodically configured CG TOs, e.g. to scheduling node 760.

The circuitry 730 is exemplarily considered to comprise CG TO selection and indication circuitry 735, which selects CG TOs for performing the uplink transmission on. As is further shown in **Fig. 8****,** the CG TO selection and indication circuitry 735 may comprise CG TO selection circuitry 836 responsible for selecting the CG TOs for the uplink transmission and UTO indication generation circuitry 837 responsible for generating the UTO indication, which may comprise determining the CG TOs associated with the UTO indication.

It is, however, noted that the circuitries 730, 735, 836 and 837 may implement more functionality than the above-mentioned, and the functionalities mentioned above may in general be implemented by circuitry 730 without being limited to the respective circuitries 735, 836 and 837 described above.

Also provided is a scheduling node or scheduling apparatus 760, which is shown in **Fig. 8** (right-hand side). The scheduling node 760 comprises a transceiver 770 and circuitry 780.

The transceiver 770, in operation, transmits a CG configuration, e.g. to a communication apparatus 710, which periodically configures CG TOs. The transceiver 770 further receives, e.g. from communication apparatus 710 an UTO indication indicating which of the periodically configured CG TOs configured by the CG configuration are not selected by communication apparatus 710 for an uplink data transmission.

The circuitry 780, in operation, determines the CG TOs associated with the UTO indication, including the selected CG TOs, based on at least one of:
- a number of repetitions configured for the uplink data transmission, or
- an amount or type of data transmitted in addition to the UTO indication on a CG TO where the UTO indication is transmitted.

The transceiver 770, in operation, receives the uplink data transmission, e.g. from communication apparatus 710, on the selected CG TOs among the periodically configured CG TOs associated with the UTO indication.

The circuitry 780 is exemplarily considered to comprise CG TO determination circuitry 785 shown in **Fig. 7****.** As shown in **Fig. 9****,** exemplary CG TO determination circuitry may comprise CG TO configuration circuitry which, in operation, generates a CG TO configuration to be transmitted to a communication apparatus 710, e.g. in response to the communication apparatus requesting a grant for a periodic data transmission on the uplink. The CG TO determination circuitry 785 may further comprise selected CG TO determination circuitry 987, which may be responsible for determining the CG TOs associated with a received UTO.

It is, however, noted that the circuitries 780, 785, 986 and 987 may implement more functionality than the above-mentioned, and the functionalities mentioned above may in general be implemented by circuitry 780 without being limited to the respective circuitries 785, 986 and 987 described above.

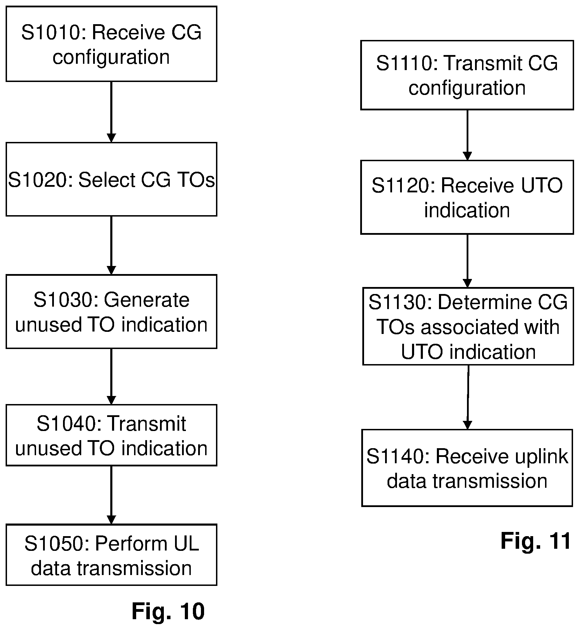

In correspondence with the above-described communication apparatus 710, is a communication method for a communication apparatus. Steps of the communication method for a communication apparatus are shown in **Fig. 10****.**

The communication method for a communication apparatus comprises a step S1010 of receiving a CG, configuration which periodically configures CG TOs. For instance, the communication apparatus receives the CG configuration from a scheduling node.

In step S1020, the communication apparatus selects CG TOs from the periodically configured CG TOs for uplink data transmission.

The communication method for a communication apparatus further includes a step S1030 of generating an UTO indication and a step S1040 of transmitting the UTO indication, e.g. to a scheduling node. The UTO indication indicates which of the periodically configured CG TOs are not selected for the uplink data transmission. The periodically configured CG TOs associated with the UTO indication are determined based on at least one of:
- a number of repetitions configured for the uplink data transmission, or
- an amount or type of data transmitted in addition to the UTO indication on a CG TO where the UTO indication is transmitted.

The communication method for a communication apparatus further comprises a step S1050 of performing the uplink data transmission, e.g. to a scheduling node, on the selected CG TOs in accordance with the UTO indication.

Moreover, in correspondence with the above-described scheduling node 760, provided is a communication method for a scheduling node, steps of which are shown in **Fig. 11****.**

The communication method for a scheduling node comprises a step S1110 of transmitting a CG configuration which periodically configures CG transmission occasions, TOs for an uplink transmission. E.g. the scheduling node transmits the CG configuration to be received by a communication apparatus 710 in corresponding step S1010.

Subsequently, the communication method for a scheduling node comprises a step S1120 of receiving an UTO indication indicating which of the periodically configured CG TOs are not selected for an uplink data transmission. E.g., the UTO indication is received as transmitted from communication apparatus 710 in step S1040 of the corresponding method.

The communication method for a scheduling node then comprises step S1130 of determining the periodically configured CG TOs associated with the UTO indication based on at least one of:
- a number of repetitions configured for the uplink data transmission, or
- an amount or type of data transmitted in addition to the UTO indication on a CG TO where the UTO indication is transmitted.

The communication method for a scheduling node further includes step S1140 of receiving the uplink data transmission on the selected CG TOs among the periodically configured CG TOs associated with the UTO indication. For instance, the scheduling node receives uplink data transmitted by communication apparatus 710 in the corresponding method step S1050.

The details, examples and embodiments to be described further are to be considered as applying to each of the above-described communication apparatus 710, scheduling node 760, and corresponding methods, unless the context indicates otherwise.

The above-mentioned CG configuration may be a semi-static configuration received and transmitted via semi-static signaling such as RRC (Radio Resource Control) signaling. In addition to or included in the CG configuration, the communication apparatus 710 may receive from scheduling node 760 a configuration indicating a number of repetitions for an uplink transmission. The number of repetitions may be specific to a CG configuration, a specific type of data (e.g. user data, control data, or type of user data such as video or frame type such as I frame, P frame or B frame).

The configured CG TOs may be CG PUSCH transmission occasions as mentioned above. For instance, a periodicity of CG TOs may be defined in terms of slots, and the CG configuration may include further information, such as starting symbol within the slot, to indicate the particular locations of the periodic CG TOs in the time domain. With such configuration, the UTO indication may refer to slots to identify transmission occasions on which the uplink transmission is not to be performed. Alternatively, the periodicity may be defined in terms of other units such as symbols, or mini-slots, or combination of slot and symbol.

A CG TO may include time resources such as a slot and/or symbol positions within a slot.

In the above-described selection of CG TOs for uplink transmission, CG TOs may be selected in accordance with the time when new data from a higher layer is available for transmission, such as an arrival of a video frame which may be subject to jitter, and/or the size of data to be transmitted on the uplink, e.g. a number of transport blocks (TBs) required.

Furthermore, the UTO indication may be transmitted as uplink control information (UCI). For instance, the UTO indication is transmitted on one of the CG TOs such as PUSCH CG TOs.

The UTO indication may be similar in structure to the above-described UTO indication as shown in **Fig. 4** where a bitmap indicates, among the CG TOs associated with the PUSCH indication, whether or not one or more CG TOs are used for the uplink transmission. Further, In the CG TOs shown in **Fig. 4****,** each bit corresponds to a single CG TO, and the UTO indication is associated with a series of subsequent CG TOs among the configured CG TOs, such as 8 CG TOs if the UTO indication consists of 8 bits.

According to the present disclosure, however, the periodically considered CG TOs are determined e.g. based on the type of information carried on a PUSCH with the UTO indication or based on whether repetitions are configured. Therein, the number or range of CG TOs indicated by a UTO indication may vary by a single bit applying to a plurality of UTO indications and/or by varying the number of bits of the UTO indication dependent on a type or amount of data carried by a PUSCH.

It can be understood that CG TOs "associated with the UTO indication" are to be distinguished from CG TOs selected for the uplink transmission. The CG TOs associated with the UTO indication may comprise both used CG TOs selected for uplink transmission and unused CG TOs not selected for uplink transmission. In an exemplary convention, a bit value "1" indicates unused CG TO(s), whereas a bit value "0" indicates used CG TOs. However, other conventions, such as "0" indicating unused CG TO(s), may be used as well. In other words, the CG TOs associated with the UTO indication are CG TOs to which the UTO indication is applicable. The number of CG TOs to which the UTO indication is applicable determines a number or "range" or "horizon" of outstanding CG TOs among the periodically configured CG TOs that can be indicated and covered by an UTO indication.

With a determination of CG TOs associated with a UTO indication as disclosed herein, the present disclosure may facilitate reducing the number and frequency of UTO indications necessary and thereby facilitate resource efficiency.

### Exclusion of a current TB transmission from UTO indication

In an example of UTO indication in accordance with the present disclosure, when a UE performs a PUSCH repetition for a TB transmission, the following PUSCH occasions used for repetition of the same TB transmission are excluded from the UTO indication (which is also transmitted on the same TOs as the TB).

In some embodiments, the selected CG TOs include a first plurality of CG TOs for transmitting a same first transport block in a first series of repetitions. The first transport block is transmitted by the communication apparatus 710 and received by the scheduling node 760 on the first plurality of CG TOs from the periodically configured CG TOs. The UTO indication is transmitted on one or more of the same first plurality of CG TOs where the first transport block is also transmitted in a series of repetitions. The UTO indication excludes an indication that the first plurality of CG TOs are selected for the uplink data transmission.

Here, the "first" plurality of CG TOs refers to CG TOs on which a complete bundle of repetitions of a transport block is performed, e.g. using the same or different redundancy versions, and on which the UTO indication is also transmitted. For instance, the UTO indication may be transmitted on each of the first plurality of transmission occasions, and the CG TOs to which the UTO indication is applicable are determined based on a redundancy version of repetitions as described above.

It is further noted that in the present disclosure, a "complete series of repetitions" or "bundle of repetitions" includes each of an initial transmission (e.g. RV #0) and the one or more repetitions (e.g. RV#1, RV #2, ...) following the initial transmission. A number of a complete series of repetitions, including the initial transmission, is the same as the above-mentioned number of repetitions configured for the uplink data transmission.

In accordance with an exclusion the first plurality of CG TOs from UTO indication, the CG TOs to which the UTO indication is applicable start from a first CG TO subsequent to the CG TOs where the UTO indication and the series repetitions are transmitted.

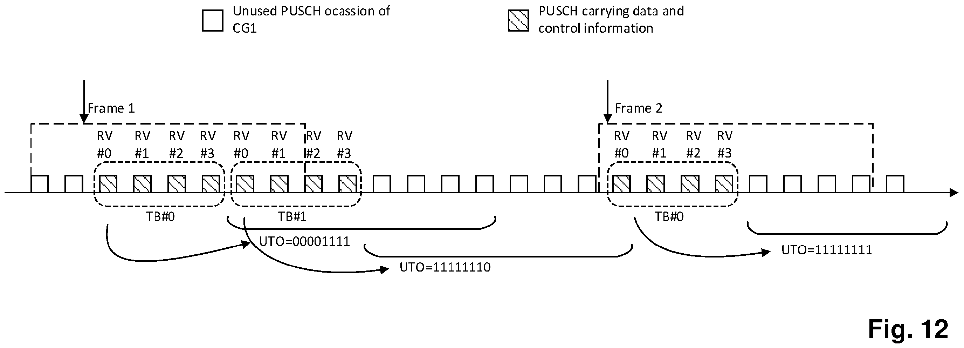

**Fig. 12** illustrates an exemplary mapping of UTO indication where a UE is configured with a CG configuration similar to the CG configuration from the example of **Fig. 6****.** In the example shown, the UE performs 4 repetitions for each TB transmission. When a UE initiates PUSCH repetitions for a TB transmission, the following PUSCH occasions used for the same TB transmission are excluded from the UTO indication (e.g. in a UTO-UCI).

For instance, the UTO indication carried along the first TB (TB#0) of Frame 1 includes the PUSCH occasions used for the transmission of the second TB (TB#1) of Frame 1 and 4 additional PUSCH occasions. The UTO indication carried along the second TB (TB#1) of Frame 1 includes 8 PUSCH occasions after the PUSCH repetition, 7 of which are indicated as unused. The UTO indication of PUSCH repetitions for transmission of a TB (TB#0) of Frame 2 includes the 8 PUSCH occasions, beginning after the PUSCH repetition bundle, which are each indicated as unused.

In accordance with the present embodiments where a current TB transmission is excluded from UTO indication, the present disclosure facilitates for a UE to map the UTO bits to later PUSCH occasions. As a result, the UE may need to transmit less UTO indications, facilitating more efficient resource utilization.

### Single bit for bundle of PUSCH repetitions

In a further example of UTO indication in accordance with the present disclosure, a UTO-UCI carries a single bit for a bundle of PUSCH occasions that will be used for carrying the same TB.

In some embodiments, the selected CG TOs include a second plurality of CG TOs for transmitting a same second transport block in a second series of the configured number of repetitions, the UTO indication comprises one bit mapped to the plurality of CG TOs selected for the transmission of the same second transport block. The same second transport block is transmitted on the second plurality of CG TOs.

It should be noted that in the present disclosure, the labels "first" and "second" plurality of CG TOs, transport block, or series of repetitions are used to indicate a relationship between a plurality of CG TOs, a series of repetitions and a UTO indication.

If a reference is made to a "first plurality of CG TOs", a "first TB" and a "first series of repetitions", the TB is transmitted in a series of repetitions on the same "first" plurality of CG TOs as said UTO indication.

If a reference is made to a "second plurality of CG TOs", a "second TB" and a "second series of repetitions", the TB is transmitted in a series of repetitions on a "second" plurality of CG TOs subsequent to the "first" plurality of CG TOs where the first TB and said UTO indication are transmitted. The second plurality of CG TOs may carry another, different UTO indication, e.g. which is applicable to CG TOs subsequent to the second plurality of CG TOs.

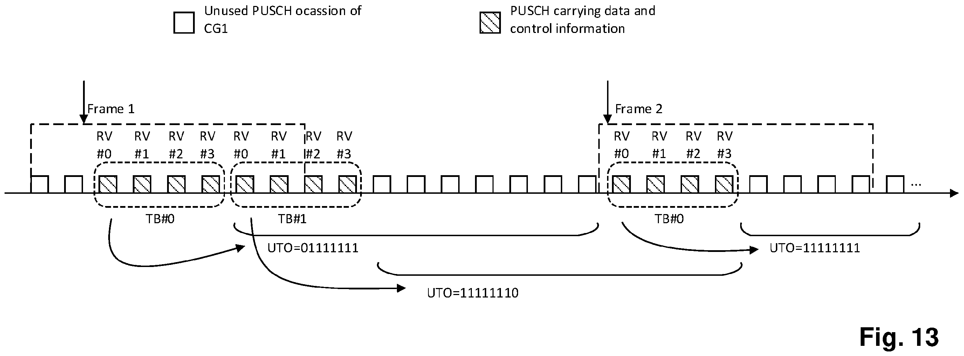

Furthermore, as shown in the following example, said one bit may be mapped to the complete second series of the configured number of repetitions of the same second transport block. However, as will be described further, the present disclosure is not limited to the indicated corresponding to the second plurality of CG TOs being the configured number of repetitions. **Fig. 13** shows an example of a CG configuration similar to the one shown in **Figures 6** **and** **12****.** In the example shown, the UE performs 4 PUSCH repetitions for each TB transmissions. For the UTO indication, a single bit is assigned to a bundle of PUSCH occasions that will be used for a TB transmission in a complete series of repetitions.

For instance, the UTO indication carried by the PUSCH repetitions (corresponding to "first" repetitions with respect to the UTO indication) carrying the first TB (TB#0 as a "first" TB) of Frame 1, includes 8 bits, the first bit is set as 0 that indicates the following 4 PUSCH occasions will be used for a TB transmission (TB#1 for Frame 1) with 4 PUSCH repetitions (corresponding to "second" repetitions with respect to said UTO indication carried along TB#0). The following bits of the UTO indication are set to 1, indicating not using any of the following 7 PUSCH occasions subsequent to the repetitions of TB#1 for Frame 1. As further shown, Frame 2 arrives early during the jitter window with a moderate size, so it can be carried with a single TB (TB#0) with 4 PUSCH repetitions.

Embodiments of the present disclosure where a single bit is mapped to a series of repetitions facilitate reducing a number of bits dedicated to a repetition bundle, and thereby may allow for more TOs subsequent to a current repetition to be indicated in a UTO indication. Accordingly, efficient resource utilization may be facilitated.

It is noted that **Fig. 13** combines the embodiments of using a single bit for a bundle of PUSCH repetitions with the embodiments of excluding a current TB transmission from UTO indication. For instance, in the UTO indication carried with TB#0 on Frame 1, there is no bit or bits that mapped to the repetitions of TB#0. According to the present disclosure, the embodiments described in section *"Exclusion of a current TB transmission from UTO indication"* and present section *"Single bit for bundle of PUSCH repetitions"* can be provided in combination or independently of each other.

### Collision of repetition with TDD downlink resource

In case a transmission occasion of a PUSCH repetition collides with semi-static/dynamic TDD DL symbol/slot, the PUSCH repetition may be canceled or postponed to another PUSCH occasion. The bit mapped to the corresponding collided transmission occasion may be 1) removed from the UTO-UCI or 2) reserved and indicated as unused. 1) or 2) can be different for the semi-static and dynamic TDD DL symbol/slot.

In some embodiments, the periodically configured CG TOs include an invalid CG TO collided with a downlink resource interrupting the configured number of repetitions, the UTO indication excludes the invalid CG TO or includes a dedicated bit indicating the CG TO collided with the downlink resource as unused.

In this disclosure, an "invalid" CG TO refers to a CG TO from a CG configuration which collides (e.g. overlaps partially or completely) with time resources (slots or symbols) which are configured semi-statically (e.g. in above mentioned configurations *tdd-UL-DL-ConfigurationCommon* or *tdd-UL-DL-ConfigurationDedicated* or *SSB*) or by dynamic configuration (e.g. via DCI) as downlink resources in TDD (time division duplex) operation. For instance, a resource configured semi-statically as "flexible" may be configured dynamically as "downlink" and thus be invalid.

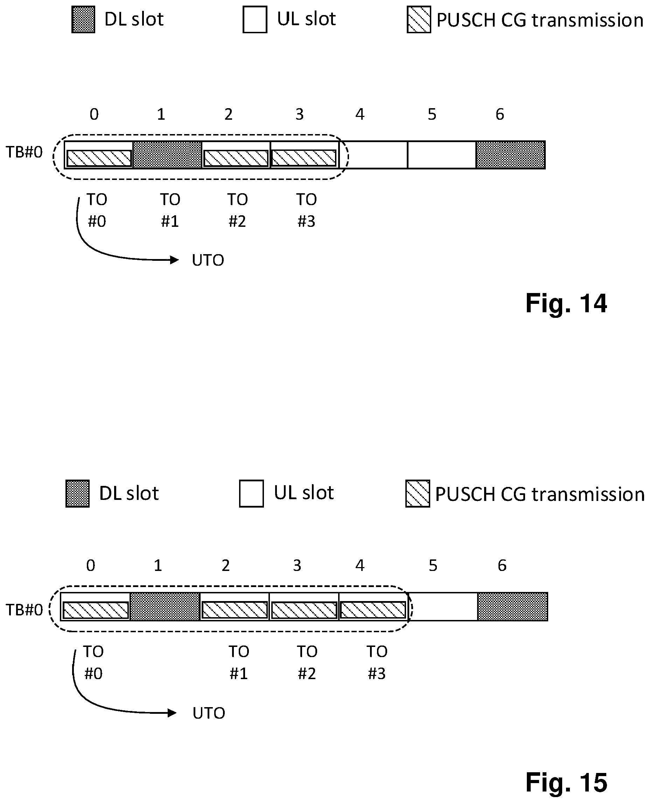

In an example shown in **Fig. 14****,** the UE is configured to perform 4 PUSCH repetitions for a TB transmission (TB#0). The second PUSH repetition (TO#1) collides with a DL slot and is canceled (e.g., *AvailableSlotCounting* is disabled, which refers to counting of slots available for a series of repetitions. When *AvailableSlotCounting* is enabled, a transmission can be postponed from an invalid transmission occasion to a later transmission occasion e.g. following the remaining repetitions of the same series). The PUSCH repetitions are performed on slots 0, 2, and 3. The UTO-UCI consists of 4 bits that can be mapped in different ways, as shown in **Table 1.**

**Table 1**

| | **bit0** | **Bit1** | **Bit2** | **Bit3** |
|---|---|---|---|---|
| Design 1 | Slot 1 | Slot 2 | Slot 3 | Slot 4 |
| Design 2 | Slot 2 | Slot 3 | Slot 4 | Slot 5 |
| Design 3 | TB#0 (Slot 0... Slot3) | Slot 4 | Slot 5 | Slot 6 |
| Design 4 | TB#0 (Slot0...Slot3) | Slot 1 | Slot 4 | Slot 5 |
| Design 5 | TB#0 Part1 (Slot 0) | Slot 1 | TB#0 Part2 (Slot 2,3) | Slot 5 |

In Design 1, the bit for invalid PUSCH occasion (i.e., PUSCH occasion in Slot 1) is reserved and included in the UTO indication. The bit may be set as 1 indicating that PUSCH occasion is not used by the UE.

In Design 2, the bit for invalid PUSCH occasion is removed from or excluded from the UTO-UCI.

In Design 3, a single bit is used for PUSCH repetitions carrying the same TB. There is no dedicated bit in the UTO-UCI for the invalid PUSCH occasion.

In Design 4, a single bit is used for PUSCH repetitions carrying the same TB. A dedicated bit in the UTO-UCI is used for the invalid PUSCH occasion. The bit may be set as 1 indicating that PUSCH occasion is not used by the UE.

In Design 5, there are two bits dedicated to PUSCH repetitions carrying the same TB. The first bit maps to one or more PUSCH occasion(s) before the invalid PUSCH occasion. The other bit maps to the remaining PUSCH repetition(s) after the invalid PUSCH occasion. A dedicated bit is also used for the invalid PUSCH occasion.

In some embodiments exemplified by Design 5, a first bit mapped to a plurality of first CG TOs preceding or following the invalid CG TO in time, and the UTO indication includes a second bit mapped to one or more second CG TOs following the downlink resource in time if the first CG TOs precedes the invalid CG TO or preceding the invalid CG TO if the first CG TOs follows the invalid CG TO.

It is noted that Design 5 discloses a case where either the one or more first CG TOs before the invalid CG TO ("Part1") or the one or more second CG TOs after the invalid CG TO ("Part2") may correspond to the above-mentioned "second plurality of CG TOs" to which a single bit (the "first" bit or, respectively, the "second" bit, is mapped). In such an example, the "second plurality" of CG TOs does not correspond to a complete series of repetitions as the complete series of repetitions is divided into CG TOs before the invalid CG TO and CG TOs after the invalid CG TO.

It is noted that in Designs 1 to 5, one or more bits are mapped to the "valid" CG TOs that are actually used for the repetitions. However, it is also possible to provide a dedicated bit for an invalid CG TO (indicating "1") if the surrounding bits where repetitions are actually transmitted are excluded from the UTO indication.

In a further example shown in **Fig. 15****,** the UE is configured to perform 4 PUSCH repetitions for a TB transmission (TB#0). The second PUSCH repetition (TO#1) collides with a DL slot and is postponed to a later PUSCH occasion (e.g., *AvailableSlotCounting* is enabled). The PUSCH repetitions are performed on slots 0, 2, 3, and 4. The UTO-UCI consists of 4 bits that could be mapped in different ways, as shown below in **Table 2.**

**Table 2**

| | **bit0** | **Bit1** | **Bit2** | **Bit3** |
|---|---|---|---|---|
| Design 1 | Slot 1 | Slot 2 | Slot 3 | Slot 4 |
| Design 2 | Slot 2 | Slot 3 | Slot 4 | Slot 5 |
| Design 3 | TB#0 (Slot 0, 2, 3, 4) | Slot 5 | Slot 6 | Slot 7 |
| Design 4 | TB#0 (Slot 0, 2, 3, 4) | Slot 1 | Slot 5 | Slot 6 |
| Design 5 | TB#0 Part 1 (Slot 0) | Slot 1 | TB#0 Part 2 (Slot 2,3,4) | Slot 5 |

Designs 1 to 5 shown in **Table 2** follow the same principles as described above for **Table 1.** However, since the repetition configured for invalid slot 1 is postponed to slot 4, bit0 of Designs 3 and 4 as well as bit2 of Design 5 are interpreted by the UE and gNB as implying indication of slot 4 as being used.

Using a dedicated bit in the UCI for an invalid PUSCH occasion, e.g. as in Designs 1, 4 and 5) may facilitate for the gNB to identify whether the UE has identified the invalid PUSCH occasion correctly (e.g., the UE has decoded the relevant TDD configuration such as an SFI (slot format indicator) successfully). For instance, a dedicated bit may be included in the UTO indication if the invalid CG TO is dynamically configure as "invalid", and the dedicated bit may be omitted if the invalid CG TO is invalid as per dynamically configured slot format indicator.

Mapping one bit to the complete set of CG TOs carrying valid repetitions or mapping one bit to CG TOs carrying the before the invalid CG TO or after the invalid CG TO may reduce the number of bits used for UTO indication in comparison with a respective bit provide for each CG TO, and more CG TOs may be covered by a single UTO indication. Accordingly, resource efficiency may be improved.

### Adaptation to time period

In the following, embodiments are considered where a TB transmission with PUSCH repetition is postponed/canceled or performed with a reduced number of repetitions if a minimum number of PUSCH repetitions cannot be performed within a time period. For instance, the time period may be a predefined time unit, the time period could be multiple of CG period at which slots are configured for CG uplink transmissions. The corresponding PUSCH occasions (e.g. the available CG TOs within the period insufficient for carrying out the complete series of repetitions) may be dropped from the UTO-UCI or replaced by a single bit indicating that the corresponding PUSCH occasions are dropped (value "1" for "unused") or a single bit for the reduced number of available PUSCH occasions (value "0" for "used").

For instance, the time period is included in CG configuration.

In some embodiments, the communication apparatus is configured with a time period. If, among the periodically configured CG TOs, a number of available CG TOs within the time period is not sufficient for accomplishing the configured number of repetitions (or a required minimum number of repetitions, which may be configured as the same or different from the configured number), the UE refrains from performing the uplink transmission within the time period and generates a buffer status report indicating that there is still untransmitted data available. The buffer status report is transmitted by UE 710 e.g. to the scheduling node 760. The scheduling node 760 schedules transmission of the outstanding, untransmitted data dynamically, and the UE 710 monitors for an indication of dynamic grant scheduling transmission of the untransmitted data.

For instance, if the number of available CG TOs within the time period is not sufficient for accomplishing the configured number of repetitions, the unused TO indication may comprise one bit indicating a plurality of unused CG TOs at the end of the time period (e.g. the available CG TOs of a number insufficient for the outstanding transmission) as unused.

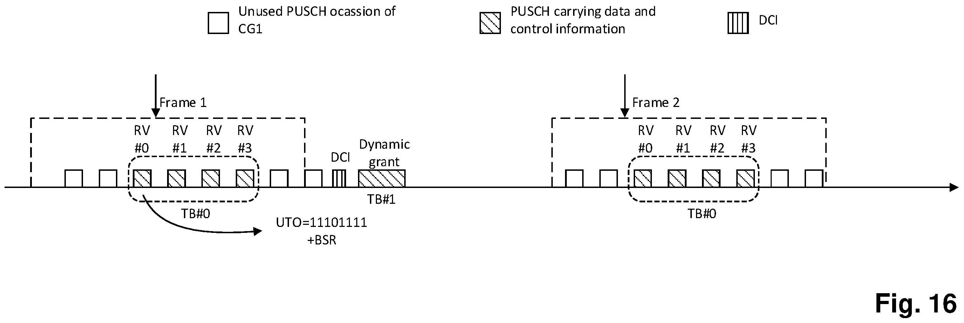

An example is shown in **Fig. 16** where a UE 710 is configured with 4 PUSCH repetitions for each TB transmission. In addition, the UE is configured to cancel performing the PUSCH repetition by CG if a minimum number of PUSCH repetitions cannot be performed within the CG period. For instance, the UE may be configured to perform the TB transmission if at least 3 repetitions are possible. The first TB (TB#0) transmission of Frame 1 is performed with 4 repetitions. For the second TB (TB#1) of Frame 1, there are only 2 PUSCH occasions within the CG period. Hence, the TB transmission is not performed with CG PUSCHs. To indicate this, the UE sends a UTO-UCI (including an UTO indication with a bit having value "1" for the 2 PUSCH occasions left within the period) and a buffer status report (BSR) indicating that there are still data for transmission while the following 2 CG PUSCH occasions, as indicated by the UTO indication, will not be used. The gNB determines by evaluation of the BSR and the UTO-UCI that there are still data for transmission and provides additional UL resources dynamically by sending a DCI. The TB#1 then is transmitted by dynamic grant. In the UTO-UCI, only one bit is used for the two corresponding PUSCH occasions. As mentioned, a single bit can be assigned for the remaining PUSCH occasions until the end of the time period.

The above-described approach facilitates achieving that a minimum required number of PUSCH repetitions is performed within the time period. If a TB transmission with the minimum PUSCH repetitions is not feasible, the UE is enabled to indicate this, and the gNB can provide additional UL resources dynamically. By dropping the corresponding PUSCH occasions from the UTO-UCI (and possibly replacing the by a single bit for unused CG TOs), further PUSCH occasions can be indicated by the UTO indication.

As described above, the UE refrains from transmitting the transport block within the time period if a number of available time resources is not sufficient for performing a complete series of repetitions or at least minimum required number of repetitions. Alternatively, the UE may perform the uplink transmission with a reduced number of repetitions.

In some embodiments, the communication apparatus is configured with a time period, and if, among the periodically configured CG TOs, a number of available CG TOs within the time period is not sufficient for accomplishing the configured number of repetitions, the uplink data transmission is performed on a reduced number of repetitions smaller than the configured number of repetitions.

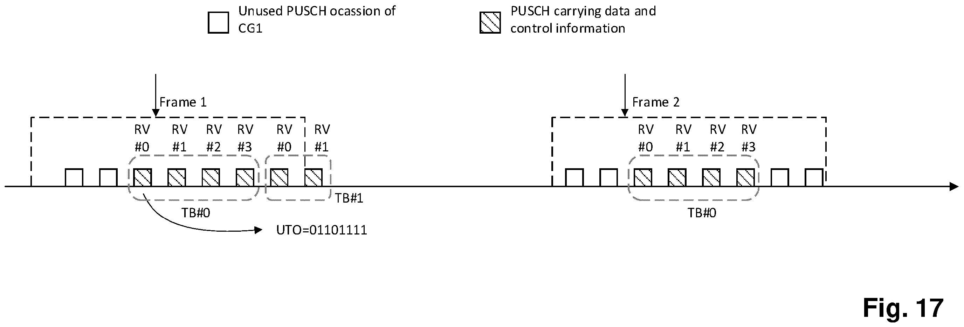

An example for using a reduced number of repetitions is shown in **Fig. 17****,** where the UE is configured with 4 PUSCH repetitions for each TB transmission. Two transport blocks TB#1 and TB#2 are needed for transmission of Frame 1. The UE can only perform the PUSCH repetitions using PUSCH occasions within a CG period. For Frame 1, the UE performs 4 repetitions for TB#0. For the TB#1 of Frame 1, there are only two PUSCH occasions available within the period. Hence, the UE performs only 2 PUSCH repetitions. The first bit of the UTO transmitted along TB#0 is assigned to the two PUSCH occasions used for the 2 PUSCH repetitions of TB#1.

Transmitting a transport block with a reduced number of TBs may facilitate avoiding extending a PUSCH repetition or transmission of a data packet such as a frame to the next or some later CG period. Accordingly, using a reduced number of repetitions may facilitate avoiding introducing additional delays.

### Adaptation of UTO indication bitmap to data type/amount

In the following, embodiments are considered where a different bitmapping depending on information carried by a PUSCH, e.g. when a PUSCH carries
a) 1) only control information and 2) control information along data (e.g. user data), or
b) 1) only UTO indication and 2) UTO indication along other control information, such as CQI, BSR.

In some embodiments, a number of bits of the UTO indication is adapted to an amount or type of data transmitted in addition to the UTO indication on the CG TO where the UTO indication is transmitted. For instance, the number of bits of the UTO indication is a first number of bits if the transceiver transmits the UTO indication using a physical uplink shared channel, PUSCH which carries only control information and a second number different from (e.g. smaller than) the first number if the PUSCH carries user data (e.g. payload data from higher layers such as video frame data, possibly configured with a number of repetitions) in addition to the control information.

Moreover, as mentioned above, the number of bits may be the first number or the second number if the PUSCH carries control information only, depending on whether the PUSCH is dedicated to the UTO indication (carrying only the UTO indication) or other control information.

More generally, the first number or second number may be selected depending on a number of bits available in the PUSCH.

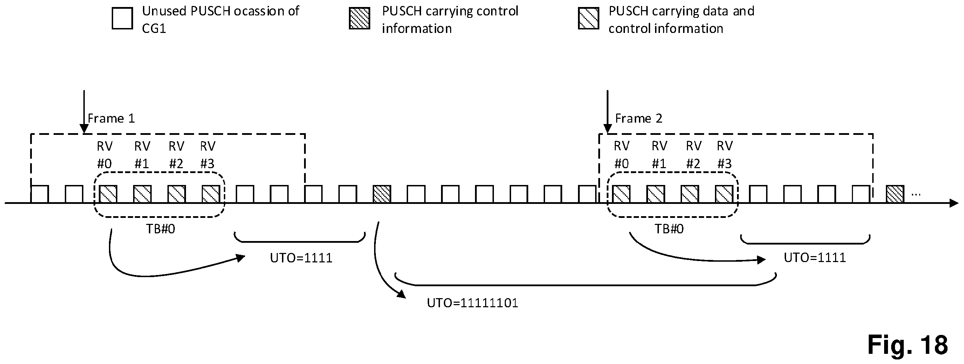

An example is shown in **Fig. 18** where a UE is configured with 4 repetitions for each TB transmission. The UE carries 4 bits for the UTO-UCI when a carrying PUSCH includes the UTO indication along the data (e.g., the UTO indications carried along TB#0 of Frame 1 and Frame 2). When a PUSCH does not include data information, 8 bits are assigned to UTO-UCI (e.g. the UTO indication on the fifth CG TO after the last repetition (RV #3) of Frame 1). In addition, different bitmapping schemes, e.g., with different resolution/granularity could be used. The same approach is applicable when the control information includes only UTO and other information, such as BSR, CQI.

Accordingly, the UTO indication size and mapping scheme are adopted according to the PUSCH usage, e.g., more bits are assigned when data is not carried by the PUSCH. This allows for space saving design of control information and at the same time, the number of UTO indications may be reduced. Accordingly, the UTO design may contribute to transmission efficiency.

It is noted that the adaptation of the bit size or length of the UTO indication may be provided in combination with the above-described approaches where a single bit in the UTO is mapped to a plurality of CG TOs, e.g. carrying repetitions as they may commonly contribute to transmission efficiency.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. For example, a relay node, a network node, and a scheduling device may be considered (each) as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Aspects

In summary, according to a first aspect, provided is a communication apparatus comprising a transceiver, which, in operation, receives a configured grant, CG, configuration, which periodically configures CG transmission occasions, and circuitry which, in operation, selects CG TOs from the periodically configured CG TOs for uplink data transmission, and generates an unused transmission occasion, UTO, indication indicating which of the periodically configured CG TOs are not selected for the uplink data transmission, wherein the circuitry, in operation, determines the periodically configured CG TOs associated with the UTO indication based on at least one of:
- a number of repetitions configured for the uplink data transmission, or
- an amount or type of data transmitted in addition to the UTO indication on a CG TO where the UTO indication is transmitted, and
wherein the transceiver, in operation, transmits the UTO indication, and performs the uplink data transmission on the selected CG TOs.

According to a second aspect, which may be provided in combination with the first aspect, the selected CG TOs include a first plurality of CG TOs for transmitting a same first transport block in a first series of the configured number of repetitions, the transceiver, in operation, transmits the first transport block on the first plurality of CG TOs from the periodically configured CG TOs, and the transceiver, in operation, transmits the UTO indication on one or more of the first plurality of CG TOs, and the UTO indication excludes an indication that the first plurality of CG TOs are selected for the uplink data transmission.

According to a third aspect, which may be provided in combination with the first or second aspect, the selected CG TOs include a second plurality of CG TOs for transmitting a same second transport block in a second series of the configured number of repetitions, the UTO indication comprises one bit mapped to the plurality of CG TOs selected for the transmission of the same second transport block, and the transceiver, in operation, transmits the same second transport block on the second plurality of CG TOs.

According to a fourth aspect, which may be provided in combination with the third aspect, said one bit is mapped to the complete second series of the configured number of repetitions of the same second transport block.

According to a fifth aspect, which may be provided in combination with any one of the first to fourth aspects, when the periodically configured CG TOs include an invalid CG TO collided with a downlink resource interrupting the configured number of repetitions, the UTO indication excludes the invalid CG TO or includes a dedicated bit indicating the CG TO collided with the downlink resource as unused.

According to a sixth aspect, which may be provided in combination with the fifth aspect, said one bit is a first bit mapped to a plurality of first CG TOs preceding or following the invalid CG TO in time, and the UTO indication includes a second bit mapped to one or more second CG TOs following the downlink resource in time if the first CG TOs precedes the invalid CG TO or preceding the invalid CG TO if the first CG TOs follows the invalid CG TO.

According to a seventh aspect, which may be provided in combination with any one of the first to sixth aspects, the communication apparatus is configured with a time period, and if, among the periodically configured CG TOs, a number of available CG TOs within the time period is not sufficient for accomplishing a required minimum number of repetitions, the circuitry, in operation, generates a buffer status report indicating that there is still untransmitted data available, and the transceiver, in operation, transmits the buffer status report and monitors for an indication of dynamic grant scheduling transmission of the untransmitted data.

According to an eighth aspect, which may be provided in combination with the seventh aspect, the unused TO indication comprises one bit indicating a plurality of unused CG TOs at the end of the time period as unused.

According to a ninth aspect, which may be provided in combination with any one of the first to sixth aspects, the communication apparatus is configured with a time period, and if, among the periodically configured CG TOs, a number of available CG TOs within the time period is not sufficient for accomplishing the configured number of repetitions, and the transceiver, in operation, performs the uplink data transmission on a reduced number of repetitions smaller than the configured number of repetitions.

According to a tenth aspect, which may be provided in combination with any one of the first to ninth aspects, a number of bits of the UTO indication is adapted to an amount or type of data transmitted in addition to the UTO indication on the CG TO where the UTO indication is transmitted.

According to an eleventh aspect, which may be provided in combination with the tenth aspect, the number of bits of the UTO indication is a first number of bits if the transceiver transmits the UTO indication using a physical uplink shared channel, PUSCH which carries only control information and a second number different from the first number if the PUSCH carries user data in addition to the control information.

According to a twelfth aspect, provided is a scheduling node comprising a transceiver which, in operation, transmits a configured grant, CG, configuration, which periodically configures CG transmission occasions, TOs, and receives an unused transmission occasion, UTO, indication indicating which of the periodically configured CG TOs are not selected for an uplink data transmission, and circuitry, which, in operation, determines the selected CG TOs associated with the UTO indication based on at least one of:
- a number of repetitions configured for the uplink data transmission, or
- an amount or type of data transmitted in addition to the UTO indication on a CG TO where the UTO indication is transmitted,
wherein the transceiver, in operation, receives the uplink data transmission on the selected CG TOs among the periodically configured CG TOs associated with the UTO indication.

According to a thirteenth aspect, which may be provided in combination with the twelfth aspect, the selected CG TOs include a first plurality of CG TOs for transmitting a same first transport block in a first series of the configured number of repetitions, the transceiver, in operation, receives the first transport block on the first plurality of CG TOs from the periodically configured CG TOs, and the transceiver, in operation, receives the UTO indication on one or more of the first plurality of CG TOs, and the UTO indication excludes an indication that the first plurality of CG TOs are selected for the uplink data transmission.

According to a fourteenth aspect, which may be provided in combination with the twelfth or thirteenth aspect, the selected CG TOs include a second plurality of CG TOs for transmitting a same second transport block in a second series of the configured number of repetitions, the UTO indication comprises one bit mapped to the plurality of CG TOs selected for the transmission of the same second transport block, and the transceiver, in operation, receives the same second transport block on the second plurality of CG TOs.

According to a fifteenth aspect, which may be provided in combination with the fourteenth aspect, said one bit is mapped to the complete second series of the configured number of repetitions of the same second transport block.

According to a sixteenth aspect, which may be provided in combination with any one of the twelfth to fifteenth aspects, when the periodically configured CG TOs include an invalid CG TO collided with a downlink resource interrupting the configured number of repetitions, the UTO indication excludes the invalid CG TO or includes a dedicated bit indicating the CG TO collided with the downlink resource as unused.

According to a seventeenth aspect, which may be provided in combination with the sixteenth aspect, said one bit is a first bit mapped to a plurality of first CG TOs preceding or following the invalid CG TO in time, and the UTO indication includes a second bit mapped to one or more second CG TOs following the downlink resource in time if the first CG TOs precedes the invalid CG TO or preceding the invalid CG TO if the first CG TOs follows the invalid CG TO.

According to an eighteenth aspect, which may be provided in combination with any one of the twelfth to seventeenth aspects, the transceiver, in operation, transmits a configuration of a time period, and if, among the periodically configured CG TOs, a number of available CG TOs within the time period is not sufficient for accomplishing a required minimum number of repetitions, the transceiver, in operation, receives a buffer status report indicating that there is still untransmitted data available, the circuitry, in operation, schedules transmission of the untransmitted data, and the transceiver, in operation, transmits an indication of dynamic grant scheduling the transmission of the untransmitted data.

According to a nineteenth aspect, which may be provided in combination with the eighteenth aspect, the unused TO indication comprises one bit indicating a plurality of unused CG TOs at the end of the time period as unused.

According to a twentieth aspect, which may be provided in combination with any one of the twelfth to seventh aspects, the transceiver, in operation, transmits a configuration of a time period, and if, among the periodically configured CG TOs, a number of available CG TOs within the time period is not sufficient for accomplishing the configured number of repetitions, and the transceiver, in operation, receives the uplink data transmission on a reduced number of repetitions smaller than the configured number of repetitions.

According to a twenty-first aspect, which may be provided in combination with any one of the twelfth to twentieth aspects, a number of bits of the UTO indication is adapted to an amount or type of data transmitted in addition to the UTO indication on the CG TO where the UTO indication is transmitted.

According to a twenty-second aspect, which may be provided in combination with the twenty-first aspect, the number of bits of the UTO indication is a first number of bits if the transceiver receives the UTO indication using a physical uplink shared channel, PUSCH which carries only control information and a second number different from the first number if the PUSCH carries user data in addition to the control information.

According to a twenty-third aspect, provided is a communication method for a communication apparatus, comprising steps of receiving a configured grant, CG, configuration, which periodically configures CG transmission occasions, TOs, selecting CG TOs from the periodically configured CG TOs for uplink data transmission, generating an unused transmission occasion, UTO, indication indicating which of the periodically configured CG TOs are not selected for the uplink data transmission, wherein the periodically configured CG TOs associated with the UTO indication are determined based on at least one of
- a number of repetitions configured for the uplink data transmission, or
- an amount or type of data transmitted in addition to the UTO indication on a CG TO where the UTO indication is transmitted,
transmitting the UTO indication, and performing the uplink data transmission on the selected CG TOs.

The twenty-third aspect may be combined with aspects corresponding to the second to eleventh aspects of the corresponding communication apparatus.

According to a twenty-fourth aspect, provided is a communication method for a scheduling node, comprising transmitting a configured grant, CG, configuration, which periodically configures CG transmission occasions, TOs, receiving an unused transmission occasion, UTO, indication indicating which of the periodically configured CG TOs are not selected for an uplink data transmission, determining the periodically configured CG TOs associated with the UTO indication based on at least one of:
- a number of repetitions configured for the uplink data transmission, or
- an amount or type of data transmitted in addition to the UTO indication on a CG TO where the UTO indication is transmitted, and
receiving the uplink data transmission on the selected CG TOs among the periodically configured CG TOs associated with the UTO indication.

The twenty-fourth aspect may be combined with aspects corresponding to the thirteenth to twenty-second aspects of the corresponding scheduling node.

According to a twenty-fifth aspect, provided is an integrated circuit which, in operation, causes a communication apparatus to carry out the steps of the communication method according to the twenty-third aspect.

According to a twenty-sixth aspect, provided is an integrated circuit which, in operation, causes a scheduling node to carry out the steps of the communication method according to the twenty-fourth aspect.

According to a twenty-seventh aspect, provided is a program stored on a (non-transitory) storage medium and including code instructions, which, when executed on one or more processors of a communication apparatus, cause the one or more processors to execute the steps the twenty-third aspect.

According to a twenty-eighth aspect, provided is a program stored on a (non-transitory) storage medium and including code instructions, which, when executed on one or more processors of a scheduling, cause the one or more processors to execute the steps the twenty-fourth aspect.

Summarizing, provided are a communication apparatus, a scheduling node, and communication methods for a communication apparatus and a scheduling node. The communication apparatus comprises a transceiver, which, in operation, receives an indication configuration defining one or more configured grant, CG configurations to which an indication of unused CG transmission occasions, TOs, is applicable, and circuitry, which, in operation, generates, based on the indication configuration, the indication of unused CG TOs indicating unused TOs in a number n of TOs of the one or more CG configurations, wherein the transceiver, in operation, transmits the indication of unused CG TOs.

## Claims

1. A communication apparatus, comprising:
a transceiver, which, in operation, receives a configured grant, CG, configuration, which periodically configures CG transmission occasions, TOs; and
circuitry which, in operation, selects CG TOs from the periodically configured CG TOs for uplink data transmission, and generates an unused transmission occasion, UTO, indication indicating which of the periodically configured CG TOs are not selected for the uplink data transmission, wherein the circuitry, in operation, determines the periodically configured CG TOs associated with the UTO indication based on at least one of:
• a number of repetitions configured for the uplink data transmission, or
• an amount or type of data transmitted in addition to the UTO indication on a CG TO where the UTO indication is transmitted, and
wherein the transceiver, in operation, transmits the UTO indication, and performs the uplink data transmission on the selected CG TOs.

2. The communication apparatus according to claim 1, wherein the selected CG TOs include a first plurality of CG TOs for transmitting a same first transport block in a first series of the configured number of repetitions, the transceiver, in operation, transmits the first transport block on the first plurality of CG TOs from the periodically configured CG TOs,
the transceiver, in operation, transmits the UTO indication on one or more of the first plurality of CG TOs, and the UTO indication excludes an indication that the first plurality of CG TOs are selected for the uplink data transmission.

3. The communication apparatus according to claim 1 or 2, wherein the selected CG TOs include a second plurality of CG TOs for transmitting a same second transport block in a second series of the configured number of repetitions, the UTO indication comprises one bit mapped to the plurality of CG TOs selected for the transmission of the same second transport block, and the transceiver, in operation, transmits the same second transport block on the second plurality of CG TOs.

4. The communication apparatus according to claim 3, wherein said one bit is mapped to the complete second series of the configured number of repetitions of the same second transport block.

5. The communication apparatus according to any one of claims 1 to 4, wherein, when the periodically configured CG TOs include an invalid CG TO collided with a downlink resource interrupting the configured number of repetitions, the UTO indication excludes the invalid CG TO or includes a dedicated bit indicating the CG TO collided with the downlink resource as unused.

6. The communication apparatus according to claim 5, wherein said one bit is a first bit mapped to a plurality of first CG TOs preceding or following the invalid CG TO in time, and the UTO indication includes a second bit mapped to one or more second CG TOs following the downlink resource in time if the first CG TOs precedes the invalid CG TO or preceding the invalid CG TO if the first CG TOs follows the invalid CG TO.

7. The communication apparatus according to any one of claims 1 to 6, wherein the communication apparatus is configured with a time period, and if, among the periodically configured CG TOs, a number of available CG TOs within the time period is not sufficient for accomplishing a required minimum number of repetitions,
the circuitry, in operation, generates a buffer status report indicating that there is still untransmitted data available, and
the transceiver, in operation, transmits the buffer status report and monitors for an indication of dynamic grant scheduling transmission of the untransmitted data.

8. The communication apparatus according to claim 7, wherein the unused TO indication comprises one bit indicating a plurality of unused CG TOs at the end of the time period as unused.

9. The communication apparatus according to any one of claims 1 to 6, wherein the communication apparatus is configured with a time period, and if, among the periodically configured CG TOs, a number of available CG TOs within the time period is not sufficient for accomplishing the configured number of repetitions,
the transceiver, in operation, performs the uplink data transmission on a reduced number of repetitions smaller than the configured number of repetitions.

10. The communication apparatus according to any one of claims 1 to 9, wherein a number of bits of the UTO indication is adapted to an amount or type of data transmitted in addition to the UTO indication on the CG TO where the UTO indication is transmitted.

11. The communication apparatus according to claim 10, wherein the number of bits of the UTO indication is a first number of bits if the transceiver transmits the UTO indication using a physical uplink shared channel, PUSCH which carries only control information and a second number different from the first number if the PUSCH carries user data in addition to the control information.

12. A scheduling node, comprising:
a transceiver, which, in operation, transmits a configured grant, CG, configuration, which periodically configures CG transmission occasions, TOs, and receives an unused transmission occasion, UTO, indication indicating which of the periodically configured CG TOs are not selected for an uplink data transmission; and
circuitry, which, in operation, determines the selected CG TOs associated with the UTO indication based on at least one of:
• a number of repetitions configured for the uplink data transmission, or
• an amount or type of data transmitted in addition to the UTO indication on a CG TO where the UTO indication is transmitted,
wherein the transceiver, in operation, receives the uplink data transmission on the selected CG TOs among the periodically configured CG TOs associated with the UTO indication.

13. A communication method for a communication apparatus, comprising steps of:
receiving a configured grant, CG, configuration, which periodically configures CG transmission occasions, TOs;
selecting CG TOs from the periodically configured CG TOs for uplink data transmission;
generating an unused transmission occasion, UTO, indication indicating which of the periodically configured CG TOs are not selected for the uplink data transmission,
wherein the periodically configured CG TOs associated with the UTO indication are determined based on at least one of:
• a number of repetitions configured for the uplink data transmission, or
• an amount or type of data transmitted in addition to the UTO indication on a CG TO where the UTO indication is transmitted;
transmitting the UTO indication; and
performing the uplink data transmission on the selected CG TOs.

14. A communication method for a scheduling node, comprising:
transmitting a configured grant, CG, configuration, which periodically configures CG transmission occasions, TOs;
receiving an unused transmission occasion, UTO, indication indicating which of the periodically configured CG TOs are not selected for an uplink data transmission;
determining the periodically configured CG TOs associated with the UTO indication based on at least one of:
• a number of repetitions configured for the uplink data transmission, or
• an amount or type of data transmitted in addition to the UTO indication on a CG TO where the UTO indication is transmitted; and
receiving the uplink data transmission on the selected CG TOs among the periodically configured CG TOs associated with the UTO indication.
